# EUROPEAN PATENT SPECIFICATION

(11) **EP 3 670 148 B1**
(45) Date of publication and mention of the grant of the patent: **27.10.2021**
(21) Application number: 19212978.1
(22) Date of filing: 02.12.2019
(51) Int. Cl.: B29C 63/34, B29C 61/02, B29C 57/00, B29C 65/74, B29L 31/00

(54) **MACHINE AND METHOD FOR INTERNALLY COATING CONTAINERS**
MASCHINE UND VEFAHREN ZUR INTERNEN BESCHICHTUNG VON BEHÄLTERN
MACHINE ET PROCÉDÉ POUR APPLIQUER UN REVÊTEMENT INTERNE DE RÉCIPIENTS

(30) Priority: 19.12.2018 IT 201800020170
(43) Date of publication of application: 24.06.2020
(73) Proprietor: Metalscatola S.p.a, 24060 Telgate (BG) (IT)
(72) Inventor: MARSETTI, Nicola, I-24060 Telgate, BERGAMO (IT)
(74) Representative: Long, Giorgio

(56) References cited:
- EP-A1- 0 594 921
- EP-A1- 2 314 518
- US-A1- 2015 328 819
- US-A1- 2015 353 235

## Description

The present invention relates to a machine for internally coating containers, in particular variously-sized drums.

Manufacturing containers, and specifically drums, for containing products of various nature, liquids or powders, envisages the molding thereof from metal sheet made of tinplate. Such containers often are intended to contain toxic or highly polluting products, which makes recycling the empty container impossible. The latter therefore is disposed of as special waste.

These containers, which were it not for the residual content thereof would be completely recyclable, instead result in both an increased affordable and ecological cost for the disposal thereof due to the increased weight of the metal material with which they are made.

Additionally, if the contents are highly aggressive, the containers require an internal corrosion-resistant glazing, which has a dual disadvantage: firstly, an increase of the plant costs, which also requires an in-line coating unit; secondly, a significant environmental impact due to the resulting vapors emitted by the coating units and requiring specific removal systems. Furthermore, certain glazes in themselves make the container non-recyclable, even if the residues of the contents thereof were not toxic.

To obviate these drawbacks, certain manufacturers have proposed internal coatings of the containers made of a plastic film, which may be separated from the metal container and disposed of as special waste at the end of use, while the clean container may be sent for recycling. However, the known systems provide making up the plastic coatings in separate lines from the production line of the metal containers and finally, the coupling thereof to the latter in a semi-automatic manner, which partly requires the intervention of an operator. The production cost therefore is high and the productivity of this type of plants is low.

US 2015/353235 A1 discloses a machine that falls within the definitions of the preamble of claim 1 of the present invention.

EP 2 314 518 A1 discloses a method for inserting a disposable liner in a vessel.

US 2015/328819 A1 discloses an assembly comprising a blow-molded overpack and a liner applied within it.

EP 0 594 921 A1 discloses an apparatus for applying a removable liner layer in a vessel.

Therefore, the problem addressed by the present invention is that of providing a system which allows internally coated containers to be manufactured in an economically advantageous manner and with increased productivity.

Such a problem is solved by a machine for internally coating containers as outlined in the appended claims, the definitions of which form an integral part of the present description.

Therefore, the present invention relates to a machine for internally coating containers, comprising a system for automatically molding a coating made of plastic film configured to internally coat a container, and a system for automatically coupling said plastic film coating to said containers, in which said automatic molding system and said automatic coupling system are arranged in line.

In particular, the invention relates to machine like that described above, in which said automatic molding system and said automatic coupling system are coupled by means of a plurality of members for molding said internal plastic film coating, said molding members being movable along a path comprising a lower horizontal section, an upper horizontal section and two curvilinear sections at the ends of the horizontal sections, said path being arranged on a vertical plane.

Further features and advantages of the present invention will become more apparent from the description of certain embodiments thereof, given hereinbelow by way of non-limiting, indicative examples, with reference to the accompanying drawings:
Figure 1 depicts a side diagrammatic view of the machine for internally coating containers according to the invention;
Figure 2 depicts a diagrammatic top plan view of the machine in figure 1;
Figure 3A depicts a partial perspective view of a molding member of the machine in figure 1;
Figure 3B depicts a sectional side view of the detail in figure 3A;
Figure 3C depicts a perspective view of a detail of the molding member of the coating to be produced, of the machine in figure 1;

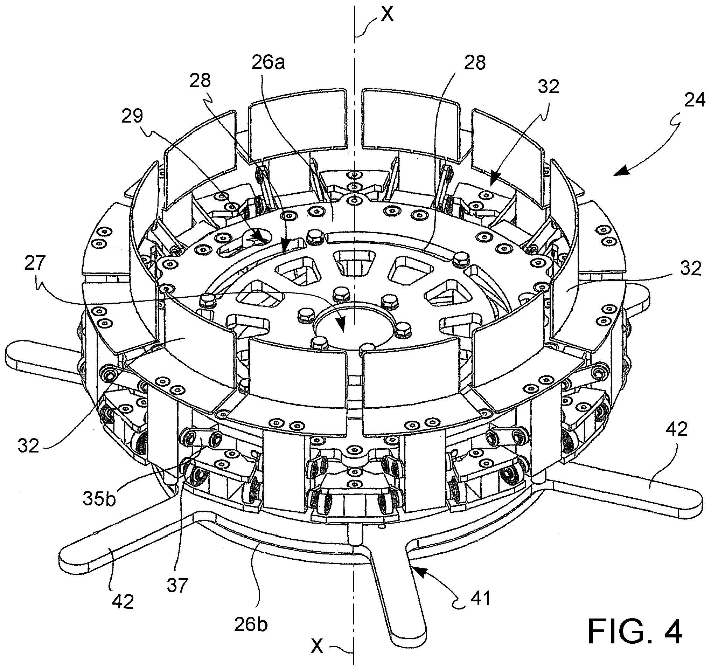

Figure 4 depicts a perspective view of a portion of the molding member in figure 3A;
Figure 5 depicts a perspective view of a detail of the molding member in figure 3A;
Figure 6 depicts a perspective view of the device for separating the containers entering the machine in figure 1;
Figure 7 depicts a perspective view of the device for moving the containers of the machine in figure 1;
Figure 8 depicts a perspective view of the member for supporting the containers of the device in figure 7;
Figure 9A depicts a top plan view of the device for ejecting the coating of the containers, of the machine in figure 1;
Figure 9B depicts a side view of the device in figure 9A;
Figure 10 depicts a perspective view of the moving system of the molding members of the machine in figure 1;
Figure 11 depicts a perspective view of the unwinding system of the machine in figure 1;
Figure 12A depicts a perspective view of the welding device of the coating body;
Figure 12B depicts a diagrammatic top view of the step of welding the coating body on a molding member;
Figure 12C depicts a side view of the welding device in figure 12A, according to the direction of the arrow in figure 12A;
Figure 13 depicts a perspective view of the furnace for heat-shrinking the coating of the containers;
Figure 14A depicts a perspective view of the welding device of the coating bottom of the containers;
Figure 14B depicts a bottom plan view of a detail of the device in figure 14A;
Figures 15A, 15b and 15C depict partial perspective views of a detail of the molding member of the invention in an operating sequence.

One embodiment of the present invention is now described with reference to the figures.

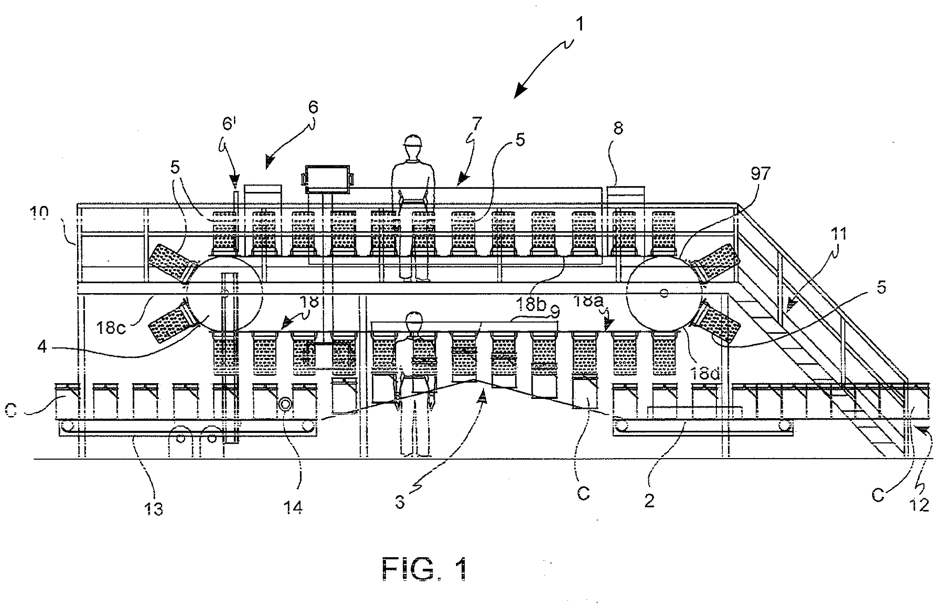

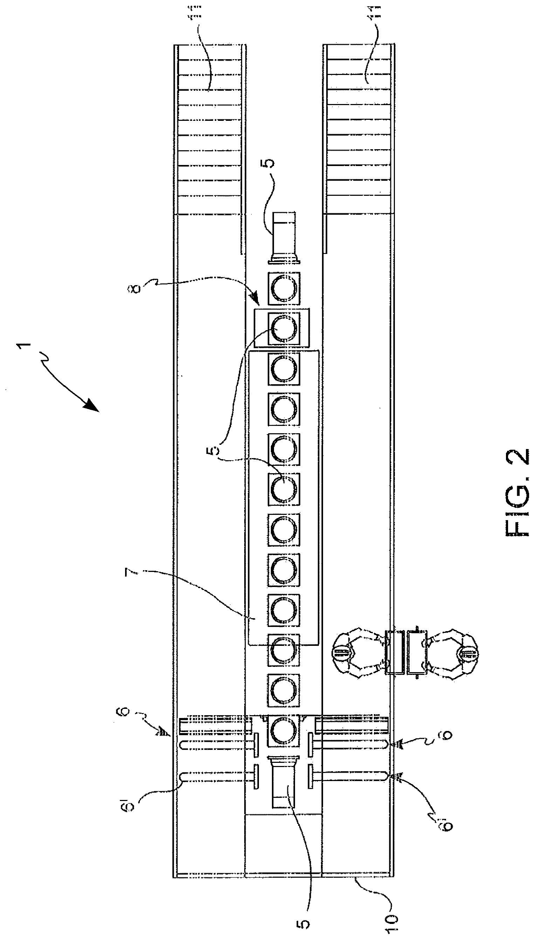

Figures 1 and 2 diagrammatically show the machine for internally coating containers C, numbered as a whole with numeral 1, which comprises:
- a device 2 for separating the containers C entering machine 1;
- a device 3 for moving the containers C;
- a system 4 for moving a plurality of molding members 5 for internally coating the containers C;
- a device 6 for welding the coating body of the containers C, upstream of which there is arranged a system 6' for unwinding a plastic film for molding the coating body of the containers C;
- a furnace 7 for heat-shrinking the coating body of the containers C;
- a device 8 for welding the coating bottom of the containers C;
- a device 9 for ejecting the coating inside the containers C.

In the embodiment of the drawings, machine 1 is arranged on two overlapping planes, but there could be a different arrangement in other embodiments, for example an arrangement in line. However, the shape shown is that which allows the smallest volume of the machine.

In preferred embodiments, machine 1 comprises a support structure 10 which may be provided with a ladder 11 for allowing access, inspection and maintenance of the structures arranged on the upper level of the machine.

The containers C are introduced into machine 1 by means of a conventional transport system 12 and are removed along a second transport system 13, again of the conventional type. The transport systems 12, 13 may be part of machine 1 or may be independent structures associated in a conventional manner with machine 1.

In certain embodiments, machine 1 may also comprise a system 14 for ejecting containers C which have not undergone internal coating, as better described later. Such an ejection system 14, which is of the thrust type and in itself is conventional, will not be described in greater detail.

Generally, machine 1 as outlined above provides the following processing steps:
a) winding a plastic film, for example a polymeric film made of a polyolefin or other corrosion-resistant material, on the lateral surface of the molding members 5 to form a coating body;
b) heat-shrinking the coating body of step a) on the lateral surface of the molding member 5;
c) welding a coating bottom made of said plastic film on the upper edge of the coating body at the top surface of the molding member 5 to form the internal coating for a container C;
d) accommodating said coating made of plastic film of step c) inside a container C.

Such a process is executed in automated manner by machine 1, as better clarified later in the description.

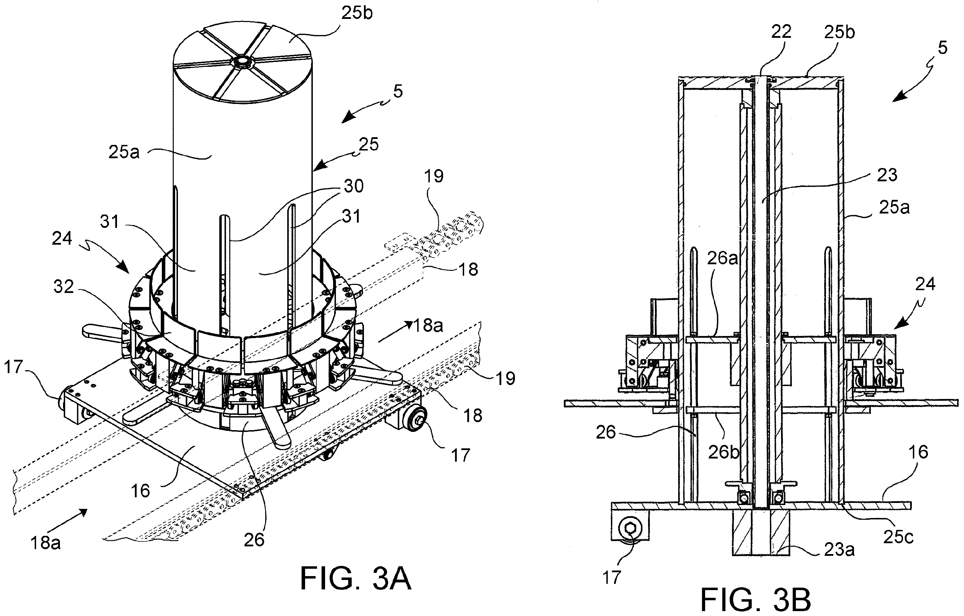

Figures 3A to 3C show the structure of the molding members 5 for internally coating containers C.

The molding member 5 comprises a molding body 15 for internally coating a container C, the molding body 15 being associated with a transport plate 16 and comprising a system 24 for clinching the coating made of plastic film on the edge of a container C.

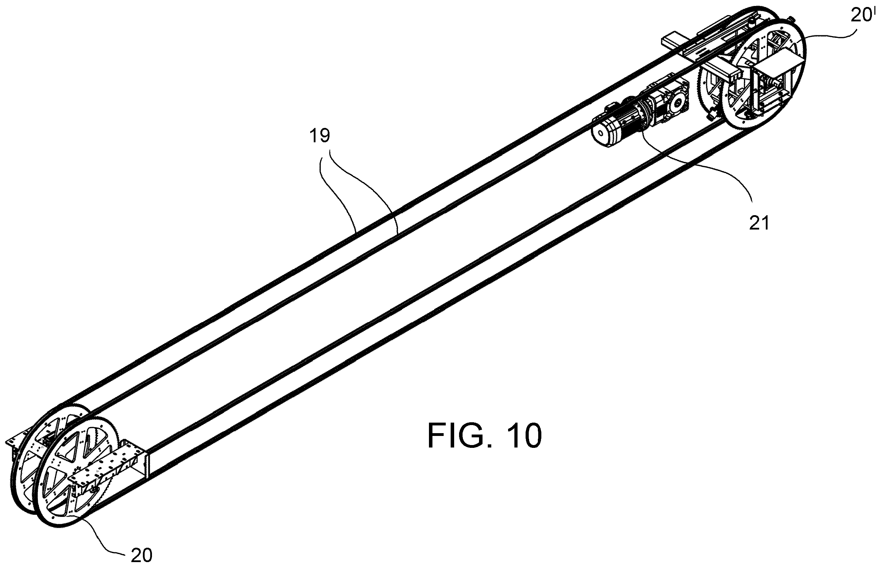

The transport plate 16 is provided with bearings 17 coupled to specific guides (not shown). The transport plate 16 is functionally coupled in a conventional manner to a dual chain 19, or dual belt, meshed on a pair of pulleys 20, 20', which are put into rotation by a drive system 21 (see also figure 10) .

The molding members 5 therefore are movable along a path 18 which comprises a lower horizontal section 18a, an upper horizontal section 18b and two curvilinear sections 18c, 18d at the ends of the horizontal sections, said path 18 being arranged on a vertical plane so that the molding members 5 have the top surface 15b facing upward at the upper section 18b and the top surface 15b facing downward at the lower horizontal section 18a, as clearly shown in figure 1.

The molding body comprises a substantially cylindrical- or truncated conical-shaped lateral surface 15a, substantially having the same internal geometry as the boxes C, and a top surface 15b. The molding body 15 further comprises a plurality of legs 15c at the base circumference.

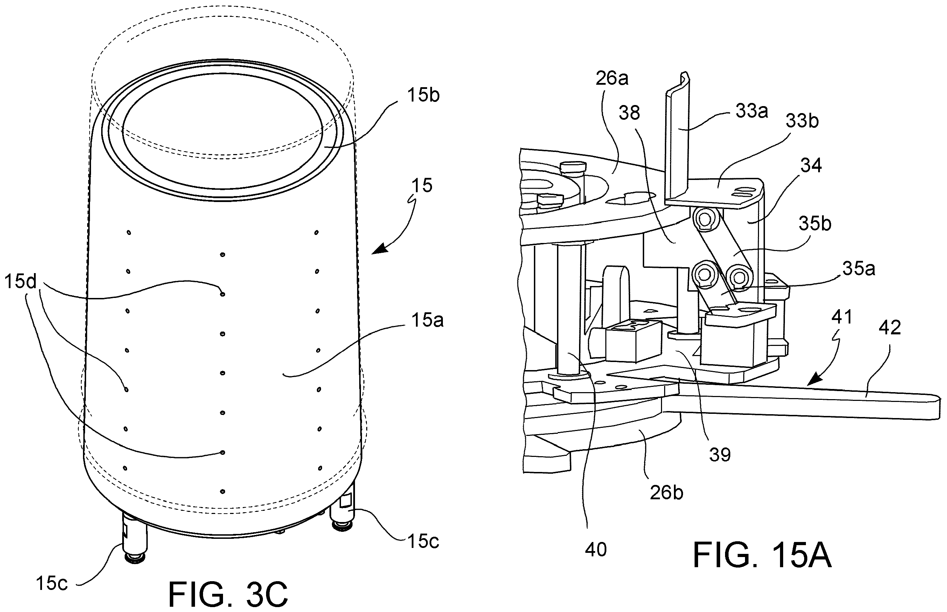

As shown in figure 3C, in certain embodiments the lateral surface 15a, and optionally also the top surface 15b, comprise a plurality of holes 15d in flow communication with a suction system so as to retain the plastic film on the surface of body 15.

The molding body 15 is arranged to cover a cylindrical element 25 so as to create a substantially coaxial structure. The cylindrical element 25 in turn comprises a lateral surface 25a, a top surface 25b and a base circumference 25c, and has a greater height extension than that of the molding body 15.

The cylindrical element 25 comprises vertical slits 30 which extend from the base circumference 25c up to a given height of the lateral surface 25a so as to delimit portions 31 having semi-circular section.

The cylindrical element 25 is restrained at the bottom to the transport plate 16 at the base circumference 25c thereof and comprises a conduit 23 therein. Conduit 23 ends below the transport plate 16 by means of a sleeve 23a, the function of which is apparent in the description later, while it opens at the top into a hole 22 arranged in middle position on the top surface 25b of the cylindrical element 25.

A support structure 26, substantially cylindrical in shape and coaxially arranged in the cylindrical element 25, also is fastened to the transport plate 16, on which support structure 26 there are fastened an upper disc 26a and a lower disc 26b. The discs 26a, 26b are spaced apart along a vertical axis X-X.

The upper 26a and lower 26b discs comprise - aligned along respective vertical axes coincident with or parallel to axis X-X - the following openings:
- a middle hole 27 for the passage of conduit 23;
- a plurality of semi-circular slits 28 arranged along a circumference;
- a plurality of slots 29, they also arranged along a more external circumference with respect to the circumference of the semi-circular slits 28.

The semi-circular slits 28 are positioned and configured to receive the semi-circular section portions 31 of the cylindrical element 25, while the slots 29 are positioned and configured to receive and restrain (by means of a rotation of a few degrees about axis X-X) the legs 15c of the molding body 15.

With reference to drawings 3A, 3B and 4, the clinching system 24 comprises a plurality of clinching blades 32 arranged circumferentially outside the molding body 15 at the lower base thereof.

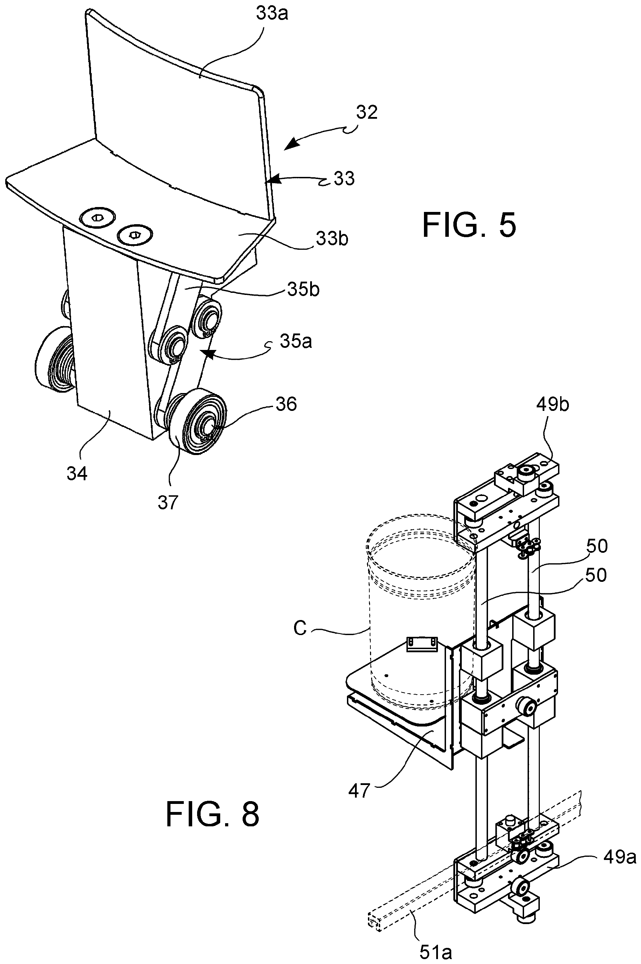

The clinching blades 32, one of which, isolated from the rest of the device, is depicted in figure 5, comprise an L-shaped structure 33 which comprises a vertically arranged semi-circular portion 33a and a base portion 33b fastened to a support body 34. A lower lever 35a and an upper lever 35b are hinged on the support body 34 so as to create an articulated connecting rod system. A bearing 37 is also hinged on the same pin 36 of the lower lever 35a.

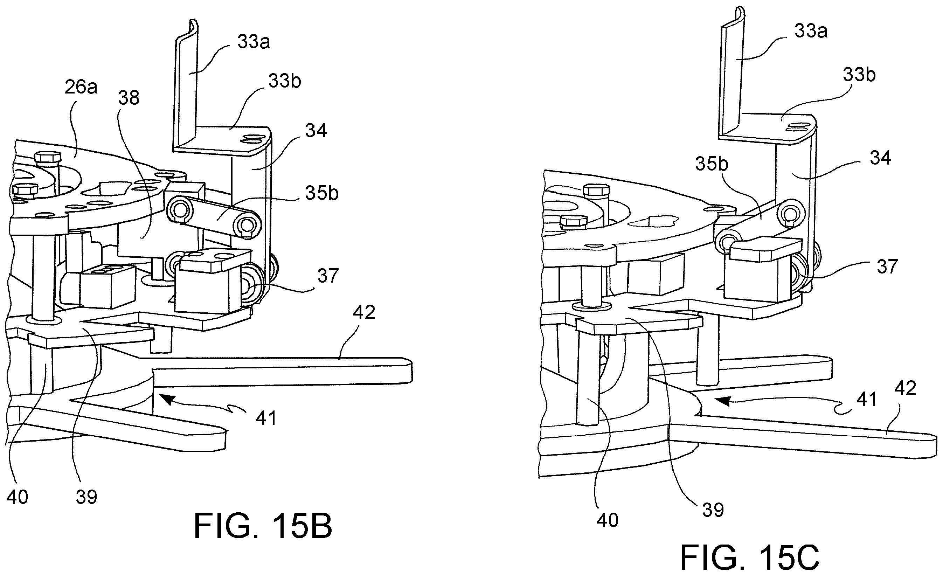

As better shown in figures 15A to 15C, the opposite ends of the levers 35a, 35b are hinged on a coupling element 38 fastened to the upper disc 26a.

The support body 34 is coupled at the bottom by means of bearing 37, to a sliding plate 39. The sliding plate 39 is vertically movable along spacer columns 40 which separate the upper disc 26a from the lower disc 26b and is moved by a cam system 41 which comprises a plurality of radial rods 42. The radial rods 42 are adapted to interact, during the travel of the molding member 5 along path 18, immediately downstream of the ejection device 9 of the coating in container C, with suitable projections (not shown) which induce the rotation by some degrees of the cam system 41 and the lifting of the sliding plate 39 by means of the interaction with a tilted surface (not shown). Thereby as clearly shown in the sequence of figures 15A to 15C, the clinching blade 32 undergoes a simultaneous lifting and radial extension movement followed by radial retraction, along a semi-circular vertical trajectory. Such a movement is allowed by the above-described connecting rod system.

Once the envisaged rotation of the cam system 41 is exceeded, the return to the starting position automatically occurs when the interaction is interrupted with the tilted plane and the sliding plate 39 returns to the lowered position.

In operating condition, that is when the molding member 5 is arranged head down, the edge of the container is inserted in the space between the molding body 15 and the clinching blades 32, while the blades 32 are arranged in the coating made of plastic film and above the edge of container C. The above-described movement of blade 32 immediately downstream of the ejection device 9 therefore allows the flap of the coating to be accompanied and overturned over the edge of container C, thus taking advantage of the elasticity of the plastic film in which the coating is made.

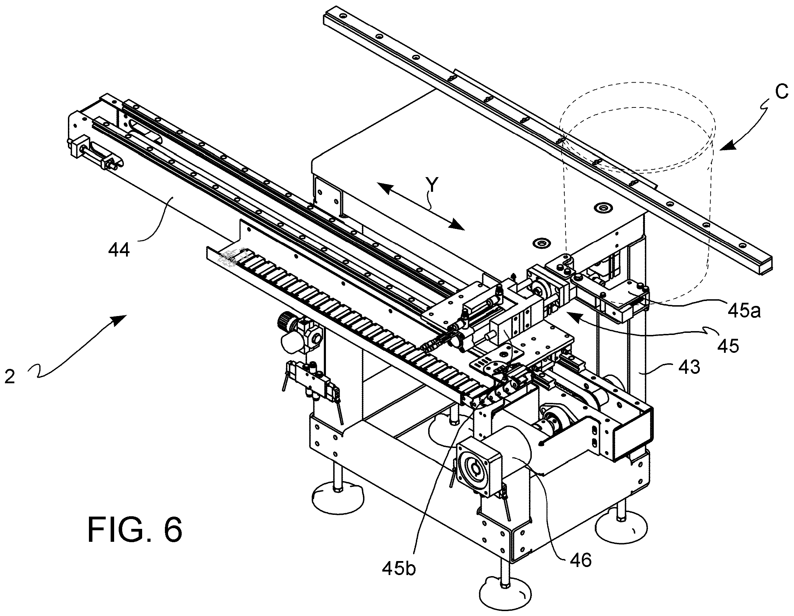

Figure 6 shows separating device 2 of the entering containers C. The separating device 2 spaces apart the containers C, which reach the transport system 12 in substantial contact, at the pitch of the molding members 5 moved by the respective moving system 4.

The separating device 2 comprises a frame 43 on which a track 44 is horizontally arranged. A gripper unit 45, which comprises a gripper portion 45a configured to pick and accompany a container C in the separating step, and a moving portion 45b, slide on track 44. The moving portion is operatively associated, for example by means of a drive belt, with a drive system 46, preferably a brushless motor. Thereby, the gripper unit 45 is moved with alternating motion along arrow Y, according to a law of motion which provides spacing apart container C picked by the gripper unit 45 at a pitch corresponding to that of the molding members 5, releasing said container C spaced apart on the moving device 3 and successively returning the gripper unit 45 in the gripping position of the successive entering container C.

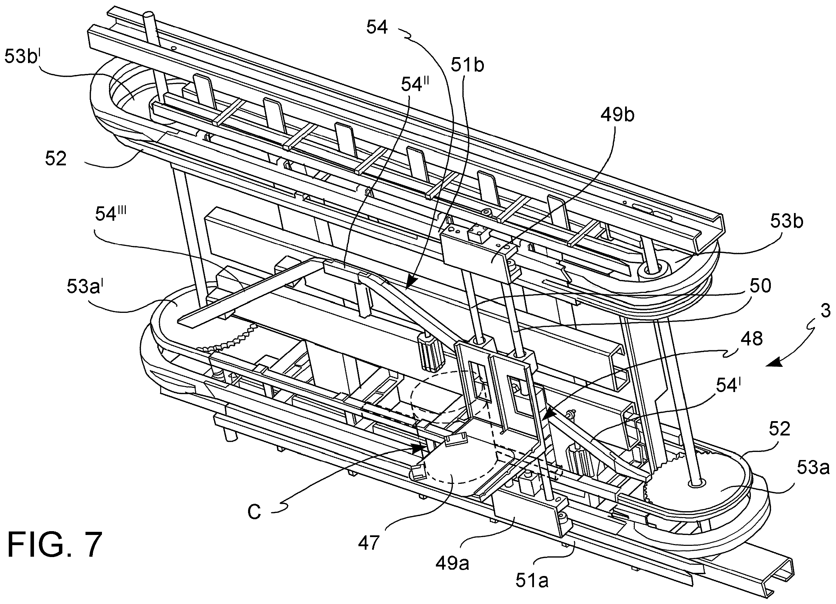

Figures 7 and 8 instead show device 3 for moving the containers C.

The moving device 3 comprises a plurality of vertically and horizontally movable plates 47. The plates 47 are slidingly mounted on a support 48 comprising a lower sliding block 49a and an upper sliding block 49b, which are connected by vertical rods 50. The sliding blocks 49a, 49b are sliding on respective tracks 51a, 51b and are coupled to motion drive means comprising a system 52 of chains or drive belts which mesh on respective pulleys 53a, 53b, 53a', 53b' moved by a suitable drive system. The plates 47 may therefore be horizontally dragged by support 48 and simultaneously slide upward or downward along the vertical rods 50.

A cam profile 54 which comprises a first ascending portion 54', a second flat top portion 54", and a third descending portion 54''', is arranged between the pulleys 53a, 53b at the opposite ends of the horizontal path of the plates 47. The plates 47 are configured to interact with said cam profile 54 so that the containers C positioned thereon are conducted into a lifted position corresponding to the second flat portion 54" so as to fit therein the coating made of plastic film on the molding members 5. Figure 1 clearly shows this operating step of machine 1. The release of the coating made of plastic film inside a container C is described later.

The plates 47 preferably are magnetized by means of a permanent magnet or an electromagnet so as to facilitate retaining the containers C thereon.

In preferred embodiments, the cam profile 54 of the moving device 3 comprises a yielding elastic vertical restraint so that the elastic deformation of said restraint allows the activation of a safety lock system which stops the movement of the plates 47, if mechanical obstacles were to occur.

The containers C are released downstream of the moving device 3 onto the transport system 13, which moves them away.

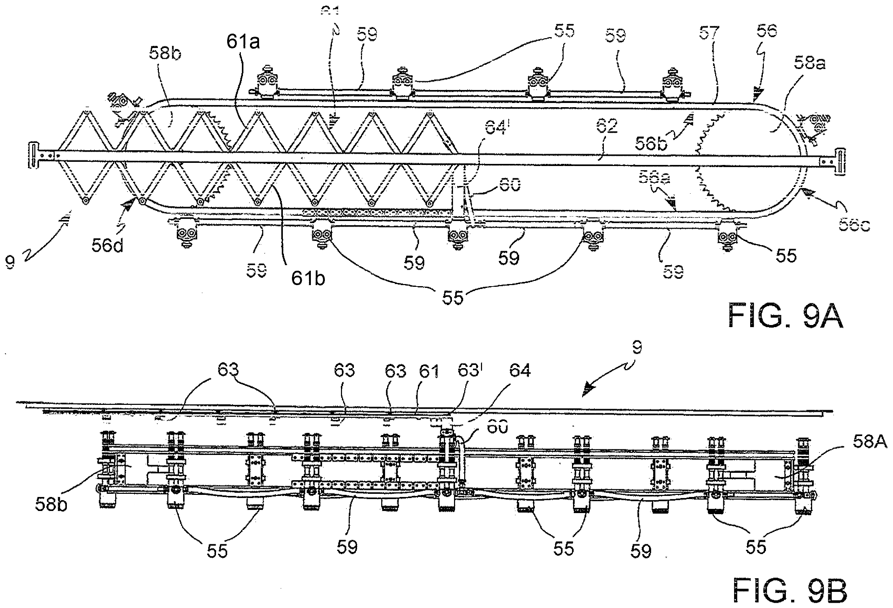

The release of the coating made of plastic film into the containers C is performed with the aid of the ejection device 9, which is shown in figures 9A and 9B.

The ejection device 9 comprises a plurality of nozzles 55 associated with a moving system 56 comprising a chain 57 or belt and a pair of driven pulleys 58a, 58b.

The moving system 56 comprises two straight sections 56a, 56b and two curvilinear sections 56c, 56d.

The nozzles 55 are connected with one another by a flexible pipe distribution system 59, while said flexible pipe distribution system 59 is connected to a flexible piping 60 in turn in flow communication with a compressed air source.

The flexible piping 60 is coupled with a pantograph system 61 which reaches the minimum extension thereof at a first pulley 58b and the maximum extension at the second pulley 58a.

The pantograph system 61 is slidingly hinged on a rectilinear profile 62 which passes through the axes of the pulleys 58a, 58b and comprises pairs of arms 61a, 61b arranged on the opposite sides of profile 62. The joining hinges 63 of the arms 61a, 61b on profile 62 slide along the profile itself. The pantograph system comprises - at the end joining hinge 63' - a rotatable sleeve 64 restrained to a bar 64' to support the end portion of the flexible piping 60.

The length of the flexible piping 60, which is zig-zag associated to opposite arms 61a, 61b of the pantograph system 61, is equal to or greater than the distance between the axes of the pulleys 58a, 58b.

The movement of the nozzles 55, molding members 5 and plates 47 is such as to obtain a homokinetic motion. Moreover, the middle of the plates, molding members 5 and nozzles 55 is on the same vertical, at the same advancing pitch.

As shown in figure 1, the ejection device 9 is arranged above the molding members 5, at the portion of lower horizontal section 18a of path 18 above the cam profile 54 and the second flat portion 54" in particular. More specifically, the nozzles 55 of a rectilinear section 56a are vertically aligned with axis X-X of the molding members 5 so as to be sealingly coupled with the respective sleeves 23a. Thereby, when a molding member carrying the coating made of plastic film is inserted into the respective container C transiting therebelow, the ejection device 9 emits a flow of compressed air through nozzle 55. Such a flow of compressed air facilitates ejecting the coating made of plastic film up to fitting the inside of container C. The clinching system 24 turns the coating flap over the edge of container C downstream of this position, as described above.

The method of forming the coating made of plastic film according to the invention is now described by means of the description of the devices of machine 1 thereto dedicated. In the embodiment shown in the drawings, such steps of the method are carried out in the upper portion of machine 1.

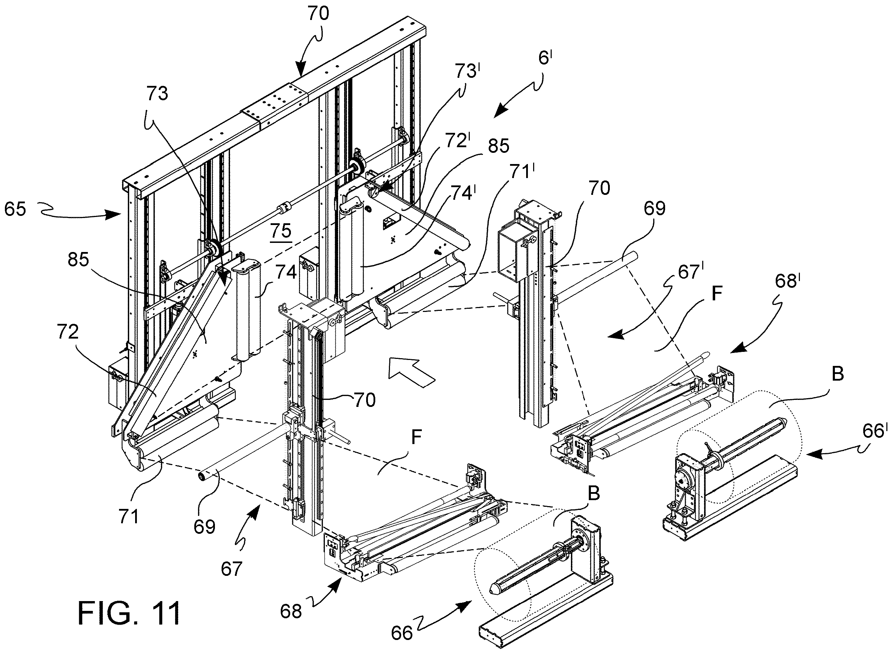

Figure 11 shows system 6' for unwinding the plastic film for molding the internal coating of the containers C.

The unwinding system 6' comprises an unwinding device 65, a pair of (optionally driven) reel holders 66, 66' of conventional type for respective reels B and a pair of tensioning devices 67, 67' arranged between the reels 66, 66' and the unwinding device 65.

In preferred embodiments, a joining device 68, 68' of conventional type is arranged between each reel-holder 66, 66' and the related tensioning device 67, 67' for joining the plastic film when reel B is changed.

The tensioning device 67, 67' is of the gravity type and comprises a tensioning bar 69 which vertically slides in a guide 70. The plastic film F passes under the tensioning bar 69 which provides the proper tensioning with the weight thereof. Indeed, if film F were drawn more, the upward mobility of bar 69 would avoid excessive tensioning, with the risk of tearing the film. In certain embodiments, the upward movement of the tensioning bar 69 may be assisted by a suitable drive system.

The unwinding device 65 comprises a frame 70 which supports a first and second pair of rollers 71, 71' horizontally arranged aligned with the tensioning bar 69 of the respective tensioning devices 67, 67' arranged at the sides of frame 70.

Frame 70 also supports two pairs of redirecting rollers 72, 72' arranged above the first and second pair of horizontal rollers 71, 71', respectively, which are oriented at 45° on a vertical plane in which frame 70 lies so that the respective upper ends 73, 73' converge in direction of the middle of frame 70.

A third and a fourth pair of rollers 74, 74' vertically extend downward from the upper ends 73, 73' of the redirecting rollers 72, 72'.

Each pair of rollers 71, 71', 72, 72', 74, 74' consists of two rollers placed side-by-side and separated by a sufficient spacing for the transit of the thickness of the plastic film F, through which film F itself is caused to pass.

In certain embodiments, the assembly of the pairs of rollers 71, 71', 72, 72', 74, 74' is arranged on a movable structure 85 which may be lifted along a sliding guide, for example by means of suitable pneumatic actuators, so as to bring such a movable structure 85, and therefore also the plastic film F, above the top surface 15b of the molding bodies 15 in transit. Thereby, if for any reason a container C is missing along the transport system 12, the unit for commanding and controlling machine 1 sends a control signal to the actuator of such a movable structure 85 so as to prevent the plastic film F from being wound onto a molding body 15 intended for the position of the missing container C.

A window 75 positioned and configured so as to allow the transit of the molding members 5 according to the arrow indicated in figure 11 opens in frame 70, between the third and fourth pair of rollers 74, 74'. Thereby, the plastic film F may be wound onto the lateral surface 15a of the molding body 15 to then be vertically welded, as described later.

It is important for the extension in height of the plastic film F to be slightly greater than that of the molding body 15 so that a portion of film F remains. Thereby, a crown of plastic film F is obtained after the heat-shrinking, on the top surface 15b of the molding body 15, which crown is required for the welding thereon of the bottom portion of the coating.

The portion of plastic film F which crosses window 75 - which results from two separate reels B - is to be welded to form a single sheet so as to allow the winding on the molding member 5. This operation at the startup of machine 1 may be obtained manually, but the welding of the two flaps automatically occurs when machine 1 is operating, as described later.

In preferred embodiments, the unwinding system 6' comprises a system for automatically regulating and adjusting the plastic films F dispensed by the two reels B so that they are aligned at the same mutual height. Such a system preferably comprises sensors connected to a command and control unit which, based on such a reading, adjusts the height of the movable structure 85.

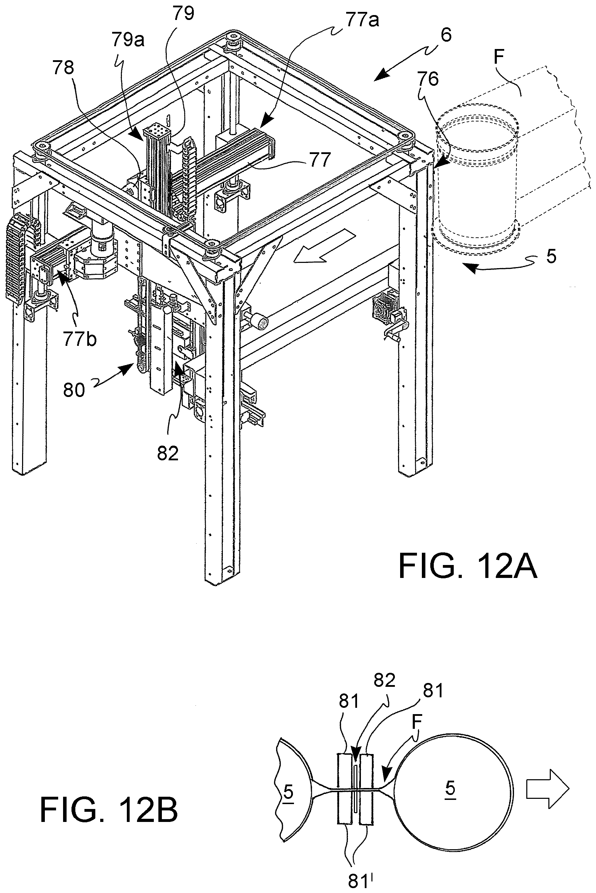

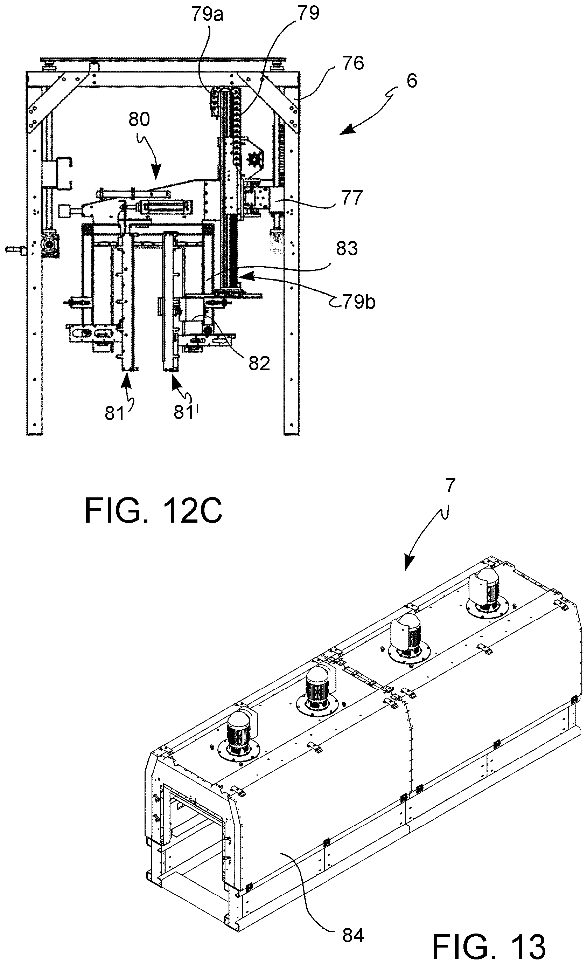

Figures 12A, 12B and 12C show the device 6 for welding the coating body for the containers C positioned immediately downstream of the unwinding system 6'.

The welding device 6 comprises a frame 76 which supports a horizontal sliding guide 77 arranged parallel to the advancement direction of the molding members 5, indicated with an arrow in figure 12A. The horizontal sliding guide 77 slidingly supports a sliding block 78 on which a vertical sliding guide 79 is restrained, on which a welding unit 80 is vertically movable.

The sliding block 78 is movable between the proximal end 77a and the related distal end 77b of guide 77.

The welding unit 80 in turn is movable between the upper end 79a and the lower end 79b of the vertical guide 79.

The welding unit 80 comprises a first and second pair of retaining bars 81, 81'. Figure 12C shows one bar alone of each pair of retaining bars 81, 81' because the second bars are hidden from sight by the first ones. Figure 12B, which is a diagrammatic top view, instead shows the arrangement of the two pairs of retaining bars 81, 81', which extension in length substantially is equal to the height of the plastic film F.

The retaining bars 81, 81' are movable between a non-operating spaced apart position (figure 12C) and an operating position (figure 12B) in which the bars keep the two flaps of the plastic film F in contact. The movement of the retaining bars 81, 81' is obtained by means of suitable pneumatic actuators.

The welding unit 80 further comprises a welding member 82, an ultrasonic bonder in particular. The welding member 82 is vertically movable on a suitable guide 83 between an upper position and a lower position, the distance of which corresponds at least to the height of the plastic film F.

The movement of the sliding block 78 along the horizontal guide 77, of the welding unit 80 along the vertical guide 79, and of the welding member 82, is actuated by a suitable drive system, preferably brushless motors.

The operation of the welding device 6 is the following.

When a molding member 5 on which the plastic film F is partially wound, approaches the welding device 6, the sliding block 78 is positioned at the proximal end 77a of the horizontal sliding guide 77, while the welding unit 80 is at the upper end 79a of the vertical sliding guide 79. When the molding member 5 is in the welding device 6, immediately downstream of the proximal end 77a of the horizontal sliding guide 77, the welding unit 80 is brought at the lower end 79b of the vertical guide 79 and the two pairs of retaining bars 81, 81' are brought to operating position (figure 12B) so as to keep the two flaps of the plastic film F in contact. The sliding block 78 is then moved from the proximal end 77a to the distal end 77b of the horizontal sliding guide 77 under homokinetic condition with respect to the advancing speed of the molding members 5. During the travel between said two ends, the ultrasonic welding member 82 is caused to slide in contact with the flaps of film F (figure 12B), thus simultaneously obtaining both the welding of the two flaps and the cutting of the plastic film F. Thereby, the molding member 5 downstream continues along path 18 with the coating body molded thereon, while the welded plastic film F begins winding the molding member 5 which reaches upstream.

Before the sliding block 78 reaches the distal end 77b of the horizontal guide 77, the two pairs of retaining bars 81, 81' are brought to the spaced apart position, the welding unit 80 is brought at the upper end 79a of the vertical guide 79 and the sliding block 78 is brought at the proximal end 77a of the horizontal guide 77 so as to allow the entry of the successive molding member 5 in the welding device 6.

Figure 13 shows the heat-shrinking furnace 7 arranged immediately downstream of the welding device 6 along path 18 of the molding members 5.

The heat-shrinking furnace 7 comprises a heat-shrinking tunnel 84 inside of which a plurality of nozzles (not shown) for dispensing hot air, protrude. Thereby, the coating body made of plastic film wound about the molding members 5 is heat shrunk and adheres to the lateral surface 15a and the outline of the top surface 15b of the molding body 15.

In certain embodiments, the surface of the holed molding body 15 is placed under a vacuum so as to cause the heat-shrunk film to better adhere on said surface. In this case, a device is prepared which is entirely similar to the ejection device 9 described above, with the difference that the nozzles are facing upward and the flexible piping 60 is put into flow communication with suitable suction means.

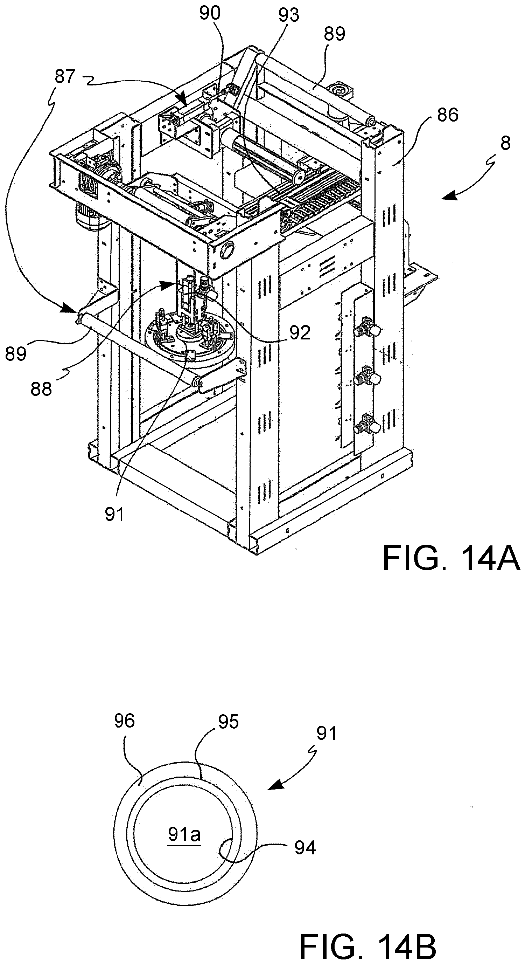

Figures 14A and 14B show a second welding device 8 arranged immediately downstream of the heat-shrinking furnace, configured to weld the coating bottom to the coating body already heat-shrunk on the incoming molding members 5.

The welding device 8 of the coating bottom comprises a frame 86 which supports a system 87 for unwinding a plastic film and a welding member 88 of the coating bottom.

The unwinding system 87 comprises tensioning rollers 89 and a driven reel support 90 and is configured to horizontally unwind a plastic film so as to cause it to slide below the welding member 88.

The welding member 88 comprises a welding disc 91 comprising a downward facing welding face 91a. The welding disc 91 is coupled to an actuator 92, preferably a pneumatic actuator, configured to move the welding disc 91 between a lowered operating position and a lifted position.

Actuator 92 is in turn mounted on a suitable sliding block which is horizontally movable on a track 93 along the transit direction of the molding members 5 on path 18. The horizontal movement of actuator 92 of the welding disc 91 is obtained by means of a suitable drive system, preferably a brushless motor, according to a law of homokinetic motion with respect to the advancing speed of the molding members 5, between an initial engagement position of an entering molding member 5 and a final release position of the molding member 5 on which the molding of the coating made of plastic film was completed.

The welding face 91a of the welding disc 91 comprises a hot welding circular profile 94 and a circular cutting profile 95 arranged externally in coaxial position with respect to the hot welding profile 94. The circular cutting profile 95 is outlined by a circular frame 96 with the function of tensioning the plastic film and promoting the cutting of the molding bottom. To this end, in certain embodiments the circular frame 96 has a plurality of holes for putting the surface thereof into flow communication with suction means.

The operation of the welding device 8 of the coating bottom is the following.

When a molding member 5 approaches the welding device 8, the welding disc 91 is in lifted position and in the initial engagement position of the molding member 5. At the entry of the latter into the welding device 8, the welding disc 91 is lowered up to pressing the plastic film unwound by the unwinding system 87 against the top surface 15b of the molding body 5. At the same time, the sliding block on which actuator 92 of the welding disc 91 is mounted, is homokinetically moved with respect to the advancing speed of the molding member 15, along path 18 up to the release position in which actuator 92 lifts the welding disc 91. During such a travel, the welding and cutting operation of the coating bottom from the plastic film, is completed.

In certain embodiments, the unwinding system does not move the plastic film, rather the latter is dragged by the molding body 15 and by the welding disc 91 between which it is retained.

In other embodiments, a drive system instead is provided for unwinding the plastic film with homokinematism with respect to molding member 5 and welding disc 91.

The above-described operation therefore provides completing the molding of the internal coating of the containers C.

In preferred embodiments, a checking system 97 of the sealing the molded internal coating is arranged downstream of the second welding device 8. Such a checking system 97 comprises a nozzle device, which nozzles are configured to be sealingly coupled to sleeve 23a of the molding members 5. The nozzles are in flow communication with suction means. The checking system 97 further comprises a pressure sensor which detects the decrease in pressure inside conduit 23 when the molded coating is not damaged, and therefore allows a perfect sealing with respect to the external environment. However, if the pressure sensor does not detect a decrease in pressure inside conduit 23 or a decrease in pressure below the expected one, this means that the internal coating of the corresponding container C is damaged, whereby it is to be rejected. Thus, a signal is sent to the command and control unit which rejects container C containing the damaged internal coating, by means of the ejecting system 14 downstream of the ejection device 9.

As mentioned, machine 1 of the invention comprises a command and control unit which controls all the operating steps of the machine operation.

The advantages of machine 1 according to the invention are immediately apparent from the above, which machine allows performing the entire molding process of the internal coating of the containers C and the coupling thereof with the containers C in a completely automated manner.

It is apparent that only certain particular embodiments of the present invention have been described, to which those skilled in the art may make all those modifications required for the adaptation thereof to particular applications without however departing from the scope of protection of the present invention.

## Claims

1. A machine (1) for internally coating containers (C), comprising a system (6', 6, 7, 8) for automatically molding a coating made of plastic film (F) configured to coat a container (C) internally, and a system (2, 9) for automatically coupling said plastic film coating to said containers (C), wherein said automatic molding system (6', 6, 7, 8) and said automatic coupling system (2, 9) are arranged in line, **characterised in that** said automatic molding system (6', 6, 7, 8) and said automatic coupling system (2, 9) are coupled by means of a plurality of members (5) for molding said internal plastic film coating, said molding members (5) being movable along a path (18) comprising a lower horizontal section (18a), an upper horizontal section (18b) and two curvilinear sections (18c, 18d) at the ends of the horizontal sections, said path (18) being arranged on a vertical plane.

2. A machine (1) according to claim 1, wherein said automatic molding system (6', 6, 7, 8) and said automatic coupling system (2, 9) are arranged on overlapping planes.

3. A machine (1) according to claim 1 or 2, comprising:
- a device (2) for separating the containers (C) entering the machine (1) from a substantial contact condition at the same pitch as the pitch of the molding members (5) along the path (18);
- a device (3) for moving the containers (C);
- a system (4) for moving the plurality of molding members (5) along said path (18);
- a device (6) for welding a coating body of the containers (C) coupled upstream to a system (6') for unwinding a plastic film (F) for molding the coating body of the containers (C);
- a furnace (7) for heat-shrinking the coating body of the containers (C) on said molding members (5);
- a device (8) for welding a coating bottom of the containers (C);
- a device (9) for ejecting the shaped coating inside the containers (C).

4. A machine (1) according to anyone of claims 1 to 3, wherein each of said plurality of molding members (5) comprises a molding body (15) for internally coating a container (C), the molding body (15) comprising a system (24) for clinching the plastic film coating on the edge of a container (C).

5. A machine (1) according to claim 4, wherein the clinching system (24) comprises a plurality of clinching blades (32), arranged circumferentially outside the molding body (15), at the lower base thereof, said clinching blades (32) being associated with an articulated connecting rod system by means of which, via the interaction with a cam system (41), the clinching blades (32) undergo a simultaneous lifting and radial extension movement followed by radial retraction, along a semi-circular vertical trajectory.

6. A machine (1) according to any one of the claims from 1 to 5, wherein said molding members (5) comprise a conduit (23) therein, which opens into a hole (22) at the top and ends at the opposite end with a sleeve (23a), which can be sealingly coupled to a nozzle (55) of said ejection device (9), the nozzle (55) being configured to introduce compressed air into said conduit (23).

7. A machine (1) according to any one of the claims from 3 to 6, wherein the device (3) for moving the containers (C) comprises a plurality of plates (47) configured to support said containers (C), said plates (47) being vertically and horizontally movable via the interaction with a cam profile (54) comprising a first ascending portion (54'), a second flat top portion (54"), and a third descending portion (54'''), wherein said moving device (3) is configured to allow the introduction of a molding member (5) comprising a plastic film coating into a container (C) when said container (C) is at said second flat top portion (54") so as to fit the plastic film coating inside said container (C) by means of compressed air ejection from said ejection device (9).

8. A machine (1) according to any one of the claims from 3 to 7, wherein said ejection device (9) comprises a plurality of nozzles (55) associated with a moving system (56), wherein said nozzles (55) move with a homokinetic motion with respect to said molding members (5), and wherein said molding members (5) move with a homokinetic motion with respect to said containers (C).

9. A method for internally coating a container (C) with a coating made of plastic film (F), comprising the following operating steps:
a) providing a machine (1) as defined in any one of the claims from 1 to 8;
b) winding a plastic film (F), such as a polymeric film made of a polyolefin or other corrosion-resistant material, on the lateral surface (15a) of the molding members (5) to form a coating body;
c) heat-shrinking the coating body of step b) on the lateral surface of the molding member (5);
d) welding a coating bottom made of said plastic film on the upper edge of the coating body at the top surface (15b) of the molding member (5) to form the internal coating for a container (C);
e) accommodating said plastic film coating of step d) inside a container (C).

## Patentansprüche

1. Maschine (1) zum internen Beschichten von Behältern (C), umfassend ein System (6', 6, 7, 8) zum automatischen Formen einer Beschichtung, welche aus einem Kunststofffilm (F) hergestellt ist, welches dazu eingerichtet ist, einen Behälter (C) intern zu beschichten, und ein System (2, 9) zum automatischen Verbinden der Kunststofffilmbeschichtung mit den Behältern (C), wobei das automatische Formsystem (6', 6, 7, 8) und das automatische Verbindungssystem (2, 9) in Reihe angeordnet sind,
**dadurch gekennzeichnet, dass** das automatische Formsystem (6', 6, 7, 8) und das automatische Verbindungssystem (2, 9) mittels einer Mehrzahl von Elementen (5) zum Formen der internen Kunststofffilmbeschichtung verbunden sind, wobei die Formelemente (5) entlang eines Pfads (18) bewegbar sind, welcher einen unteren horizontalen Bereich (18a), einen oberen horizontalen Bereich (18b) und an den Enden der horizontalen Bereiche zwei gekrümmte Bereiche (18c, 18d) umfasst, wobei der Pfad (18) auf einer vertikalen Ebene angeordnet ist.

2. Maschine (1) nach Anspruch 1, wobei das automatische Formsystem (6', 6, 7, 8) und das automatische Verbindungssystem (2, 9) auf überlappenden Ebenen angeordnet sind.

3. Maschine (1) nach Anspruch 1 oder 2, umfassend:
- eine Vorrichtung (2) zum Trennen der Behälter (C), welche in die Maschine (1) eintreten, von einem wesentlichen Kontaktzustand in dem gleichen Abstand wie der Abstand der Formelemente (5) entlang des Pfads (18);
- eine Vorrichtung (3) zum Bewegen der Behälter (C);
- ein System (4) zum Bewegen der Mehrzahl von Formelementen (5) entlang des Pfads (18);
- eine Vorrichtung (6) zum Schweißen eines Beschichtungskörpers des Behälters (C), welche einem System (6') vorgelagert verbunden ist, um einen Kunststofffilm (F) zum Formen des Beschichtungskörpers des Behälters (C) abzuwickeln;
- einen Ofen (7) zum Wärmeschrumpfen des Beschichtungskörpers der Behälter (C) auf den Formelementen (5);
- eine Vorrichtung (8) zum Schweißen eines Beschichtungsbodens der Behälter (C);
- eine Vorrichtung (9) zum Ausstoßen der geformten Beschichtung innerhalb der Behälter (C).

4. Maschine (1) nach einem der Ansprüche 1 bis 3, wobei jedes der Mehrzahl von Formelementen (5) einen Formkörper (15) zum internen Beschichten eines Behälters (C) umfasst, wobei der Formkörper (15) ein System (24) zum Durchsetzfügen der Kunststofffilmbeschichtung an dem Rand eines Behälters (C) umfasst.

5. Maschine (1) nach Anspruch 4, wobei des Durchsetzfügesystem (24) an dem unteren Ende davon eine Mehrzahl von Durchsetzfügeklingen (32) umfasst, welche umlaufend außerhalb des Beschichtungskörpers (15) angeordnet sind, wobei die Durchsetzfügeklingen (32) mit einem gelenkigen Pleuelstangensystem assoziiert sind, mittels welchem, über die Interaktion mit einem Nockensystem (41), die Durchsetzfügeklingen (32) eine gleichzeitige Anhebe- und radiale Erstreckungsbewegung erleben, gefolgt von radialer Retraktion entlang einer halbkreisartigen vertikalen Bewegungsbahn.

6. Maschine (1) nach einem der Ansprüche 1 bis 5, wobei die Formelemente (5) darin ein Rohr (23) umfassen, welches sich an dem oberen Ende in ein Loch (22) öffnet und an dem entgegengesetzten Ende mit einer Hülse (23a) endet, welche dichtend mit einer Düse (55) der Ausstoßvorrichtung (9) verbunden werden kann, wobei die Düse (55) dazu eingerichtet ist, Druckluft in das Rohr (23) einzuführen.

7. Maschine (1) nach einem der Ansprüche 3 bis 6, wobei die Vorrichtung (3) zum Bewegen der Behälter (C) eine Mehrzahl von Platten (47) umfasst, welche dazu eingerichtet sind die Behälter (C) zu stützen, wobei die Platten (47) vertikal und horizontal über die Interaktion mit einem Nockenprofil (54) bewegbar sind, welches einen ersten ansteigenden Abschnitt (54'), einen zweiten flachen oberen Abschnitt (54") und einen dritten abfallenden Abschnitt (54''') umfasst, wobei die Bewegungsvorrichtung (3) dazu eingerichtet ist, das Einführen eines Formelements (5), welches eine Kunststofffilmbeschichtung umfasst, in einen Behälter (C) zu erlauben, wenn sich der Behälter (C) an dem zweiten flachen oberen Abschnitt (54") befindet, um die Kunststofffilmbeschichtung innerhalb des Behälters (C) mittels eines Druckluftausstoßes von der Ausstoßvorrichtung (9) in den Behälter (C) einzupassen.

8. Maschine (1) nach einem der Ansprüche 3 bis 7, wobei die Ausstoßvorrichtung (9) eine Mehrzahl von Düsen (55) umfasst, welche mit einem Bewegungssystem (56) assoziiert sind, wobei sich die Düsen (55) in Bezug auf die Formelemente (5) mit einer homokinetischen Bewegung bewegen und wobei sich die Formelemente (5) in Bezug auf die Behälter (C) mit einer homokinetischen Bewegung bewegen.

9. Verfahren zum internen Beschichten eines Behälters (C) mit einer Beschichtung, welche aus einem Kunststofffilm (F) hergestellt wird, umfassend die folgenden Arbeitsschritte:
a) Bereitstellen einer Maschine (1), wie in einem der Ansprüche 1 bis 8 definiert;
b) Aufwickeln eines Kunststofffilms (F), beispielsweise eines Polymerfilms, welcher aus einem Polyolefin oder einem anderen korrosionsbeständigen Material hergestellt ist, auf der lateralen Fläche (15a) der Formelemente (5), um einen Beschichtungskörper zu bilden;
c) Wärmeschrumpfen des Beschichtungskörpers aus Schritt b) auf die laterale Fläche des Formelements (5);
d) Schweißen eines Beschichtungsbodens, welcher aus dem Kunststofffilm hergestellt wird, an den oberen Rand des Beschichtungskörpers auf der oberen Fläche (15b) des Formelements (5), um eine interne Beschichtung für einen Behälter (C) zu bilden;
e) Aufnehmen der Kunststofffilmbeschichtung aus Schritt d) innerhalb eines Behälters (C).

## Revendications

1. Machine (1) de revêtement interne de récipients (C), comprenant un système (6', 6, 7, 8) permettant de mouler automatiquement un revêtement constitué d'un film plastique (F) configuré pour revêtir l'intérieur d'un récipient (C), et un système (2, 9) permettant de coupler automatiquement ledit revêtement de film plastique auxdits récipients (C), dans laquelle ledit système de moulage automatique (6', 6, 7, 8) et ledit système de couplage automatique (2, 9) sont agencés en ligne, **caractérisée en ce que** ledit système de moulage automatique (6', 6, 7, 8) et ledit système de couplage automatique (2, 9) sont couplés au moyen d'une pluralité d'organes (5) pour mouler ledit revêtement de film plastique interne, lesdits organes de moulage (5) étant mobiles le long d'un trajet (18) comprenant une section horizontale inférieure (18a), une section horizontale supérieure (18b) et deux sections curvilignes (18c, 8d) aux extrémités des sections horizontales, ledit trajet (18) étant agencé sur un plan vertical.

2. Machine (1) selon la revendication 1, dans laquelle ledit système de moulage automatique (6', 6, 7, 8) et ledit système de couplage automatique (2, 9) sont agencés sur des plans qui se chevauchent.

3. Machine (1) selon la revendication 1 ou 2, comprenant :
- un dispositif (2) pour séparer les récipients (C) entrant dans la machine (1) d'un état de contact substantiel au même pas que le pas des organes de moulage (5) le long du trajet (18) ;
- un dispositif (3) permettant de déplacer les récipients (C) ;
- un système (4) permettant de déplacer la pluralité d'organes de moulage (5) le long dudit trajet (18) ;
- un dispositif (6) permettant de souder un corps de revêtement des récipients (C) couplé en amont à un système (6') permettant de dérouler un film plastique (F) pour mouler le corps de revêtement des récipients (C) ;
- un four (7) permettant la thermorétraction du corps de revêtement des récipients (C) sur lesdits organes de moulage (5) ;
- un dispositif (8) permettant de souder un fond de revêtement des récipients (C) ;
- un dispositif (9) permettant d'éjecter le revêtement façonné à l'intérieur des récipients (C).

4. Machine (1) selon l'une quelconque des revendications 1 à 3, dans laquelle chacun de ladite pluralité d'organes de moulage (5) comprend un corps de moulage (15) pour le revêtement interne d'un récipient (C), le corps de moulage (15) comprenant un système (24) permettant de sertir le revêtement de film plastique sur le bord d'un récipient (C).

5. Machine (1) selon la revendication 4, dans laquelle le système de sertissage (24) comprend une pluralité de lames de sertissage (32), agencées circonférentiellement à l'extérieur du corps de moulage (15), au niveau de la base inférieure de celui-ci, lesdites lames de sertissage (32) étant associées à un système de bielle articulée au moyen duquel, par l'intermédiaire de l'interaction avec un système de came (41), les lames de sertissage (32) subissent un mouvement simultané de levage et d'extension radiale suivi d'une rétraction radiale, le long d'une trajectoire verticale hémicirculaire.

6. Machine (1) selon l'une quelconque des revendications 1 à 5, dans laquelle lesdits organes de moulage (5) comprennent à l'intérieur un conduit (23) qui s'ouvre dans un trou (22) au sommet et se termine à l'extrémité opposée par un manchon (23a), qui peut être couplé de manière étanche à une buse (55) dudit dispositif d'éjection (9), la buse (55) étant configurée pour introduire de l'air comprimé dans ledit conduit (23).

7. Machine (1) selon l'une quelconque des revendications 3 à 6, dans laquelle le dispositif (3) permettant de déplacer les récipients (C) comprend une pluralité de plaques (47) configurées pour supporter lesdits récipients (C), lesdites plaques (47) étant mobiles verticalement et horizontalement par l'intermédiaire de l'interaction avec un profil de came (54) comprenant une première portion ascendante (54'), une deuxième portion à sommet plat (54") et une troisième portion descendante (54'"), ledit dispositif de déplacement (3) étant configuré pour permettre l'introduction d'un organe de moulage (5) comprenant un revêtement de film plastique dans un récipient (C) lorsque ledit récipient (C) se trouve au niveau de ladite deuxième portion à sommet plat (54") de manière à ajuster le revêtement de film plastique à l'intérieur dudit récipient (C) au moyen d'une éjection d'air comprimé depuis ledit dispositif d'éjection (9).

8. Machine (1) selon l'une quelconque des revendications 3 à 7, dans laquelle ledit dispositif d'éjection (9) comprend une pluralité de buses (55) associées à un système de déplacement (56), dans laquelle lesdites buses (55) se déplacent avec un mouvement homocinétique par rapport auxdits organes de moulage (5), et dans laquelle lesdits organes de moulage (5) se déplacent avec un mouvement homocinétique par rapport auxdits récipients (C).

9. Procédé de revêtement interne d'un récipient (C) avec un revêtement constitué d'un film plastique (F), comprenant les étapes de fonctionnement suivantes :
a) la fourniture d'une machine (1) telle que définie dans l'une quelconque des revendications 1 à 8 ;
b) l'enroulement d'un film plastique (F), comme un film polymère constitué de polyoléfine ou d'un autre matériau résistant à la corrosion, sur la surface latérale (15a) des organes de moulage (5) pour former un corps de revêtement ;
c) la thermorétraction du corps de revêtement de l'étape b) sur la surface latérale de l'organe de moulage (5) ;
d) le soudage d'un fond de revêtement constitué dudit film plastique sur le bord supérieur du corps de revêtement au niveau de la surface de sommet (15b) de l'organe de moulage (5) pour former le revêtement interne pour récipient (C) ;
e) l'adaptation dudit revêtement de film plastique de l'étape d) à l'intérieur d'un récipient (C).
